# EUROPÄISCHE PATENTANMELDUNG

(11) **EP 2 324 988 A2**
(43) Veröffentlichungstag der Anmeldung: **25.05.2011**
(21) Anmeldenummer: 10005598.7
(22) Anmeldetag: 28.05.2010
(51) Int. Cl.: B29C 51/44, B29C 33/30, B29C 33/44

(54) **Auswerfervorrichtung für Thermoformwerkzeuge**

(30) Priorität: 24.11.2009 DE 202009016031 U
(71) Anmelder: Optipack GmbH, 86850 Aretsried (DE)
(72) Erfinder: Hupfauer, Markus, 86343 Königsbrunn (DE); Pippig, Detlef, 08523 Plauen (DE); Scupin, Michael, 86343 Königsbrunn (DE); Leutenmair, Herbert, 86424 Dinkelscherben (DE)
(74) Vertreter: Leinweber & Zimmermann

(57) **Zusammenfassung**

Die Erfindung betrifft eine Vorrichtung (5) zum Auswerfen von Formteilen aus einem Formeinsatz eines Thermoformwerkzeugs mit einem an einem Ende einer zwischen einer Ausgangsstellung und einer Auswurfstellung in einer in Axialrichtung der Auswerferstange verlaufenden Auswurfrichtung (A) bewegbaren Auswerferstange (20) angebrachten Formbodenelement (10), dessen Stirnfläche (15) in der Ausgangsstellung der Auswerferstange (20) den Formboden des Formeinsatzes bildet, wobei das Formbodenelement (10) mit der Auswerferstange (20) lösbar verbunden ist. Durch eine Aufsetzbewegung des Formbodenelementes (10) ist eine dem Lösen des Formbodenelementes (10) von der Auswerferstange (20) in der Auswurfrichtung (A) entgegenwirkende form- und/oder kraftschlüssige Verbindung zwischen Formbodenelement und Auswerferstange herstellbar.

## Beschreibung

Die Erfindung betrifft eine Vorrichtung zum Auswerfen von Formteilen aus einem Formeinsatz eines Thermoformwerkzeugs mit einem an einem Ende einer zwischen einer Ausgangsstellung und einer Auswurfstellung in einer in Axialrichtung der Auswerferstange verlaufenden Auswurfrichtung bewegbaren Auswerferstange angebrachten Formbodenelement, dessen Stirnfläche in der Ausgangsstellung der Auswerferstange den Formboden des Formeinsatzes bildet, wobei das Formbodenelement mit der Auswerferstange lösbar verbunden ist.

Auswerfervorrichtungen für Thermoformwerkzeuge dieser Art sind beispielsweise aus der Schrift DE 44 34 511 A1 bekannt, auf die im Hinblick auf Funktionsweise und Aufbau von Auswerfervorrichtungen ausdrücklich verwiesen wird. Dabei dienen die Thermoformwerkzeuge insbesondere der Herstellung von Formteilen wie beispielsweise Kunststoffbechern oder Kunststoffflaschen aus einer erwärmten thermoplastischen Kunststofffolie, wobei die warme und dadurch dehnbare Folie, ggf. direkt im Anschluss an ein Extrusionsverfahren, dem Thermoformwerkzeug zugeführt wird. Die erwärmte Folie wird in Anlage an eine gekühlte Wandung des Formwerkzeuges gebracht und nimmt im Verlauf des so bewirkten Kühlvorgangs dauerhaft dessen Form an. Das Formwerkzeug besteht dabei im wesentlichen aus einem oberen Werkzeug mit Mitteln zum Eindrücken der Kunststofffolie in eine Kavität eines unteren Formwerkzeuges, wobei die Kavität des unteren Formwerkzeuges im wesentlichen von einem die Seitenflächen der Kavität bildenden Formeinsatz und einem die Bodenfläche der Kavität bildenden Formbodenelement berandet wird. Das mit der Auswerferstange verbundene Formbodenelement kann durch Verstellen der Auswerferstange in eine Auswurfstellung zum Auswerfen der Formteile in Richtung des oberen Werkzeugs bewegt werden. Formteile, die sich nur in der Höhe unterscheiden, können mit demselben Thermoformwerkzeug gefertigt werden, wenn das Formbodenelement durch ein anderes Formbodenelement ersetzt wird, das an die Abmessungen des neuen Formteils angepasst ist. Insbesondere wenn das herzustellende Formteil im wesentlichen rotationssymmetrisch ist, können auch Auswerferstange und Formbodenelement im wesentlichen rotationssymmetrische Gestalt mit der zentralen Achse der Auswerferstange als Symmetrieachse aufweisen.

Ein Austausch von Formbodenelement, ggf. auch ein Austausch des Formeinsatzes ist notwendig, wenn das Thermoformwerkzeug zur Herstellung eines Formteiles mit anderer Höhe, Volumen und/oder Form umgerüstet werden soll. Formbodenelemente aus dem Stand der Technik sind über Feststelleinrichtungen an der Auswerferstange fixiert, die zum Austausch des Formbodenelementes gelöst werden müssen. Diese Feststelleinrichtungen weisen bei den bekannten Vorrichtungen mindestens zwei quer zu der Auswurfrichtung durch die Wandung der Auswerferstange hindurchführende Gewindebohrungen und einen in jeder Gewindebohrung angeordneten Gewindebolzen auf, der zur Fixierung des Formbodenelementes in eine Ausnehmung in einer Außenfläche des Formbodenelementes eingreift.

Bei den bekannten Vorrichtungen wird im Verlauf eines Formwechsels zunächst die Auswerferstange in die Auswurfstellung gebracht. Dann werden die Gewindebolzen der Feststelleinrichtung gelöst und das Formbodenelement von der Auswerferstange abgezogen. Nach Einschrauben der Gewindebolzen in die Gewindebohrungen kann der Formeinsatz abgezogen und ausgetauscht werden. Abgeschlossen wird der Formwechsel, indem die Gewindbolzen erneut gelöst, ein neuer Formbodeneinsatz auf die Auswerferstange aufgesetzt und die Gewindebolzen zum Fixieren des neuen Formbodenelements fest angezogen werden.

Meist ist eine große Anzahl von Thermoformwerkzeugen in einer Thermoformanlage nebeneinander angeordnet. Bei einem Umrüstvorgang ist der Austausch der Formbodenelemente aller Thermoformwerkzeuge der Anlage erforderlich, weshalb eine Umrüstung regelmäßig mit einem hohen Produktionsausfall verbunden ist. Der Umrüstvorgang einer durchschnittlich großen Anlage hat beispielsweise einen Produktionsausfall in der Größenordnung von 20.000 bis 30.000 Formteilen zur Folge.

Angesichts dieser Probleme im Stand der Technik liegt der Erfindung die Aufgabe zugrunde, eine schnelle und einfache Umrüstung einer Auswerfervorrichtung eines Thermoformwerkzeuges zu ermöglichen.

Erfindungsgemäß wird diese Aufgabe durch eine Weiterbildung einer bekannten Auswerfervorrichtung gelöst, die im wesentlichen dadurch gekennzeichnet ist, dass durch eine Aufsetzbewegung des Formbodenelementes eine dem Lösen des Formbodenelementes von der Auswerferstange in der Auswurfrichtung entgegenwirkende form- und/oder kraftschlüssige Verbindung von Formbodenelement und Auswerferstange herstellbar ist.

Die Erfindung geht auf die Erkenntnis zurück, dass zusätzliche Maßnahmen zum Befestigen des Formbodenelementes, bspw. das Einschrauben von Befestigungsmitteln wie Gewindebolzen oder Schrauben in quer zur Auswurfrichtung verlaufende Gewindebohrungen nicht nötig sind, wenn das Formbodenelement selbst die nötigen Befestigungsmittel zum form- und/oder kraftschlüssigen Verbinden mit der Auswerferstange aufweist, so dass der Befestigungsvorgang allein durch die Aufsetzbewegung des Formbodenelementes erfolgt. Die Aufsetzbewegung kann beispielsweise eine Drehbewegung im Falle einer Schraubverbindung oder eine Einklink- oder Einklippsbewegung im Falle einer Schnappverbindung aufweisen oder das Formbodenelement kann im Falle einer Kupplungsverbindung in an der Auswerferstange vorgesehene Klemmelemente eingedrückt werden. Vorzugsweise geschieht das Lösen der form- und/oder kraftschlüssigen Verbindung auf analoge Weise allein durch eine Abnahmebewegung des Formbodenelementes, die ebenfalls eine Drehbewegung oder eine Ausklink- oder Ausklippsbewegung aufweisen kann. Der Formschluss und/oder Kraftschluss wirkt insbesondere in Auswurfrichtung, so dass nach Herstellen der Verbindung ein Lösen der Verbindung durch bloßes Abziehen des Formbodenelementes in Auswurfrichtung nicht möglich ist.

Erfindungsgemäß sind also keine zusätzlichen Feststelleinrichtungen wie etwa Gewindebolzen notwendig, so dass es zum Herstellen und Lösen der Verbindung nicht mehr erforderlich ist, in eine ggf. im unteren Bereich des Formbodenelementes angeordnete und damit schwer erreichbare, quer zu der Axialrichtung der Auswerferstange verlaufende Gewindebohrung mit einem Werkzeug einzugreifen und ggf. mehrmals mit dem Werkzeug nachzusetzen. Vielmehr reicht zum Herstellen bzw. Lösen der Verbindung eine Aufsetz- bzw. Ablösbewegung des Formbodenelementes selbst aus. Wenngleich auch an verschiedene andere Befestigungsmittel gedacht ist, hat sich eine Schraubverbindung oder Verbindung mit Hilfe eines Bajonettverschlusses als besonders einfach und wirksam erwiesen. Aufsetzbewegung und Abnahmebewegung weisen dann eine Drehbewegung auf.

Vorzugsweise ist das Formbodenelement auf/in ein der Auswerferstange zugeordnetes und sich in Auswurfrichtung erstreckendes Gewinde aufgeschraubt oder darin eingeschraubt. Zum Austauschen des Formbodenelementes muss das Formbodenelement dann lediglich abgeschraubt werden und ein neues Formbodenelement aufgeschraubt werden, wobei auch ein Abziehen oder Aufsetzen des Formeinsatzes nach Abschrauben des Formbodenelementes jederzeit ohne zusätzliche Vorkehrungen möglich ist, da kein Gewindebolzen und/oder keine Schraube radial nach außen abstehen und damit ein Abziehen oder Aufsetzen des Formeinsatzes behindern könnte. Nach Verstellen der Auswerferstange in Auswurfsstellung ist ein Abschrauben des Formbodenelementes ohne Probleme möglich, da zumindest der obere Teil des Formbodenelementes dann frei zugänglich ist und dessen Verdrehen um die Auswurfrichtung über den vollen Winkel von 360° ohne Behinderung erfolgen kann. Eine Schraubverbindung ist außerdem besonders einfach, sicher und zuverlässig.

Vorzugsweise weist das Formbodenelement an seinem der Auswerferstange zugewandten Ende eine Gewindeöffnung auf. Das Gewinde kann beispielsweise im Rand einer Öffnung gebildet sein, die gleichzeitig der Einleitung und/oder Ausleitung von Kühlflüssigkeit, insbesondere zur Aufnahme eines Kühlrohres oder einer Kühlrohreinrichtung in das/aus dem Formbodenelement dient. Das Formbodenelement kann dann mit Hilfe einer Drehbewegung auf ein der Auswerferstange zugeordnetes Außengewinde aufgeschraubt, bzw. mit Hilfe einer Drehbewegung durch Abschrauben von diesem Gewinde wieder gelöst werden.

Das Formbodenelement kann direkt auf/in ein Gewinde der Auswerferstange auf- oder eingeschraubt werden. Vorzugsweise weist die Vorrichtung jedoch ein bezüglich einer Drehachse im wesentlichen rotationssymmetrisches Adapterelement auf, wobei das Adapterelement über ein Außengewinde im Bereich eines ersten Abschnittes des Adapterelementes in ein dazu komplementäres Innengewinde der Auswerferstange eingeschraubt ist, und das Formbodenelement auf ein Außengewinde im Bereich eines zweiten Abschnittes des Adapterelementes aufgeschraubt ist. Das Adapterelement ist zwar im wesentlichen rotationssymmetrisch, kann jedoch in Teilbereichen, beispielsweise um das Einschrauben des Adapterelementes zu erleichtern, Elemente aufweisen, die nicht rotationssymmetrisch sind. Die Drehachse verläuft nach Einschrauben des Adapterelementes parallel zur Auswurfrichtung. Die beiden Außengewinde des Adapterelements können unterschiedliche Gewindedurchmesser aufweisen, beispielsweise um an die Durchmesser bereits vorhandener Öffnungen angepasst zu sein. Wenn nach mehrmaliger Umrüstung des Thermoformwerkzeugs Verschleißerscheinungen im Verbindungsbereich zwischen Auswerferstange und Formbodenelement auftreten, ist bei dieser Ausführungsform der Erfindung lediglich eine Auswechslung des Adapterelementes nötig, ohne dass ein Austausch oder eine Reparatur der Auswerferstange, beispielsweise durch ein Nachschneiden eines direkt in die Auswerferstange geschnittenen Gewindes, erforderlich ist. So kann der durch die Umrüstung bedingte Produktionsausfall weiter minimiert werden.

Fertigungstechnisch hat es sich als vorteilhaft erwiesen, wenn das Adapterelement eine etwa in Auswurfrichtung verlaufende Durchgangsöffnung aufweist, die der Durchführung von Leitungen und/oder Rohren, insbesondere einer Kühlrohreinrichtung dienen kann. Auf diese Weise kann Kühlflüssigkeit zur Kühlung des Formteils von der Auswerferstange durch die Durchgangsöffnung in das Formbodenelement eingeleitet werden, bzw. aus dem Formbodenelement ausgeleitet werden.

Um das Einschrauben und Ausschrauben des Adapterelementes zu vereinfachen, kann die Durchgangsöffnung in einer senkrecht zur Auswurfrichtung verlaufenden Ebene sich jeweils in radiale Richtung nach außen erstreckende Ausbuchtungen aufweisen. Derartige Ausbuchtungen können beim Ein- und Ausschrauben als Eingriffsöffnungen für ein komplementär zu den Ausbuchtungen gebildete Eingriffselemente aufweisendes Werkzeug dienen.

Vorzugsweise weist die Durchgangsöffnung drei Ausbuchtungen auf, die sich jeweils kreisbogenförmig in radialer Richtung nach außen erstrecken, so dass die Durchgangsöffnung einen etwa kleeblattförmigen Querschnitt aufweist, wobei die sich ausgehend von der Mitte der Durchgangsöffnung durch die zu den drei Kreisbögen gehörenden Kreismittelpunkte erstreckenden Halbgeraden miteinander jeweils einen Winkel von etwa 120° einschließen. Es hat sich nämlich herausgestellt, dass spezielle Vorkehrungen nötig sind, damit das Adapterelement auch nach mehrmaligem Ein- und Ausschrauben weitestgehend verschleißfrei bleibt. Die außenliegenden Mantelflächen des Adapterelements können im wesentlichen vollständig von Gewindegängen bedeckt sein, und eine Durchgangsöffnung mit rundem, insbesondere kreisförmigem Querschnitt würde ein Einschrauben und Ausschrauben des Adapterelementes erschweren. In eine Durchgangsöffnung mit Querschnitt senkrecht zur Auswurfrichtung wie beschrieben, kann dagegen ein Werkzeug mit komplementär zu den Ausnehmungen der Durchgangsöffnung gefertigten Eingriffselementen eingreifen, wodurch unter minimiertem Verschleißrisiko ein Moment und/oder eine Kraft übertragen werden kann. Vorzugsweise weist die Durchgangsöffnung in jeder senkrecht zur Auswurfrichtung verlaufenden Ebene den beschriebenen Querschnitt auf. Dann kann ein Werkzeug mit seinen Eingriffselementen tief in die Durchgangsöffnung eingreifen. Dadurch wird das Risiko eines Ausleierns oder einer Beschädigung der Struktur der Durchgangsöffnung durch eine Kraftübertragung beim Schraubvorgang minimiert.

In der Stirnfläche des Formbodenelementes kann mindestens eine mit einem in der Auswerferstange gebildeten Saugkanal in Fluidverbindung stehende Saugöffnung gebildet sein, wobei der Saugkanal mit einer Saugeinrichtung in Fluidverbindung steht. Derartige Saugöffnungen können zum einen den Zweck haben, durch Ansaugen der Kunststofffolie an das Formbodenelement die Formgebung des Formteils zu unterstützen. Ferner wird die in der Kavität vorhandene Luft beim Eindrücken der Kunststofffolie in die Kavität zumindest teilweise durch die Saugöffnungen abgeleitet. Weiterhin wird das Formteil nach dem Formvorgang durch den wirkenden Unterdruck am Formbodenelement gehalten, so dass es weiteren Einrichtungen, beispielsweise einer Stapeleinrichtung zugeführt werden kann, ohne vom Formbodenelement herunterzufallen oder zu verrutschen, wenn die Auswerferstange in Auswurfstellung bewegt wird.

Bei den beispielsweise aus der DE 44 34 511 bekannten Vorrichtungen sind zur Sicherstellung der gewünschten Saugwirkung an dem Formbodenelement und der Auswerferstange Elemente zur Zentrierung und richtigen Ausrichtung des Formbodenelementes bzgl. der Auswerferstange vorhanden, beispielsweise eine Nut oder eine Bohrung mit einem darin eingreifenden Zylinderstift. Das Formbodenelement muss nämlich beim Einbau so auf der Auswerferstange platziert und ausgerichtet werden, dass in der dem Formbodenelement zugewandten Stirnseite der Auswerferstange gebildete Saugöffnungen deckungsgleich mit Vakuumöffnungen an der Rückseite des Formbodenelementes sind. So wird bei den bekannten Vorrichtungen eine Fluidverbindung zwischen Saugöffnungen in der Stirnseite des Formbodenelementes und einem Saugkanal in der Auswerferstange gewährleistet. Ein Fixieren der Feststelleinrichtungen ist nur dann möglich und vorgesehen, wenn sich der Zylinderstift in Eingriff mit der zugehörigen Nut oder Bohrung befindet, da dann das Formbodenelement auf der Auswerferstange korrekt ausgerichtet ist.

Dieser zusätzliche Aufwand wird gemäß einem weiteren Gesichtspunkt der Erfindung dadurch beseitigt, dass in einer dem Formbodenelement zugewandten Auflagefläche der Auswerferstange und/oder in einer der Auswerferstange zugewandten Berührfläche des Formbodenelements ein Ringkanal in Form einer die zentrale Achse der Auswerferstange zumindest teilweise ringförmig umlaufenden Nut vorgesehen ist, wobei der Ringkanal mit der mindestens einen Saugöffnung und dem Saugkanal in Fluidverbindung steht. Die Ringform des Ringkanals bewirkt, dass unabhängig vom Verdrehwinkel zwischen Auswerferstange und Formbodenelement eine Fluidverbindung gewährleistet ist. Da der Ringkanal sowohl mit den Saugöffnungen des Formbodenelementes als auch mit dem Saugkanal der Auswerferstange in Fluidverbindung steht und ringförmig zwischen Auswerferstange und Formbodenelement verläuft, kann zumindest über den Winkel, über den sich der Ringkanal erstreckt, durch eine Verdrehung des Formbodenelementes gegenüber der Auswerferstange um die zentrale Achse der Auswerferstange die vorhandene Fluidverbindung zwischen Saugöffnungen und Saugkanal nicht blockiert und/oder unterbrochen werden. Daher ist bei dieser Ausführungsform der Erfindung zur Sicherstellung einer Fluidverbindung zwischen den Saugöffnungen und dem Saugkanal nach Verbinden von Formbodenelement und Auswerferstange kein weiteres Zentrier- oder Ausrichtelement zur Einstellung eines besonderen Verdrehwinkels zwischen Formbodenelement und Auswerferstange notwendig.

Vorzugsweise weist die Auflagefläche mindestens eine mit dem Saugkanal in Verbindung stehende Kanalöffnung und die Berührfläche jeweils mit mindestens einer Saugöffnung in Verbindung stehende Vakuumöffnungen auf, wobei Kanal- und Vakuumöffnungen im etwa dem Radius des Ringkanals entsprechenden Abstand von der zentralen Achse der Auswerferstange in Auflagefläche bzw. Berührfläche gebildet sind. Über den Ringkanal sind also alle Vakuumöffnungen und damit alle Saugöffnungen mit allen Kanalöffnungen und damit mit dem Saugkanal verbunden. In der Berührfläche können mehrere Vakuumöffnungen vorhanden sein, die über mehrere ggf. miteinander verbundene Kanäle mit mehreren Saugöffnungen in der Stirnfläche des Formbodenelementes verbunden sein können.

In einer bevorzugten Ausführungsform verlaufen sowohl Berührfläche als auch Auflagefläche etwa senkrecht zur zentralen Achse der Auswerferstange und umlaufen diese etwa ringförmig. Fertigungstechnisch kann eine Nut besonders einfach in senkrecht zur Auswurfrichtung verlaufende Flächenbereiche gefertigt werden. Da üblicherweise entlang der zentralen Achse der Auswerferstange eine Kühlrohreinrichtung verläuft, umgeben Berührfläche und Auflagefläche vorzugsweise die Kühlrohreinrichtung ringförmig.

Es hat sich als besonders vorteilhaft erwiesen, wenn das Formbodenelement an seinem der Auswerferstange zugewandten Ende einen sich zur Auswerferstange hin verjüngenden Konusansatz aufweist und in der dem Formbodenelement zugewandten Stirnseite der Auswerferstange eine konische Aussparung vorgesehen ist, deren Form komplementär zu der Form des Konusansatzes ist und in der der Konusansatz aufgenommen ist. Dies erleichtert das Aufsetzen eines neuen Formbodenelementes auf die Auswerferstange beim Umrüstvorgang, da durch die konische Aussparung und den Konusansatz eine Zentrierwirkung erreicht wird.

Um die Kunststofffolie schnell abzukühlen, kann das Formbodenelement angrenzend an seine Stirnfläche einen Kühlraum aufweisen, der mit einer in der Auswerferstange axial verlaufenden Rohrleitung in Verbindung steht, die mit einer Kühlmittelzufuhreinrichtung und/oder einer Kühlmittelabfuhreinrichtung verbunden ist. In der Rohrleitung kann eine koaxiale Kühlrohreinrichtung ausgebildet sein, wobei die Kühlrohreinrichtung vorzugsweise einen im Kühlraum gebildeten Rohransatz, ggf. mit Durchgangsöffnungen im Bereich des Kühlraums, und ein mit dem Rohransatz verbundenes, in der Rohrleitung koaxial angeordnetes Kühlrohr aufweist. Die Kühlrohreinrichtung dient also gleichzeitig zum Einleiten der Kühlflüssigkeit in den Kühlraum und zur Ausleitung der erwärmten Kühlflüssigkeit aus dem Formbodenelement, wobei eine koaxiale Anordnung von Einleitung und Ausleitung platzsparend und einfach ist. Die Kühlrohreinrichtung ist vorzugsweise durch die Durchgangsöffnung des Adapterelementes hindurchgeführt.

Ferner weist das Formbodenelement vorzugsweise in einer Seitenwand mindestens eine senkrecht zur Auswurfrichtung verlaufende Montagebohrung auf. Montagebohrungen können das Verbinden und das Lösen der Formbodenelemente mit/von der Auswerferstange erleichtern, da ein Eingriff eines geeigneten Werkzeugs in die Montagebohrungen, beispielsweise zur Übertragung eines Drehmomentes oder einer Kraft ermöglicht ist.

Die Erfindung betrifft weiter ein Werkzeug zum Ein- und Ausschrauben eines eine Durchgangsöffnung aufweisenden, im wesentlichen rotationssymmetrischen Adapterelementes wie oben beschrieben, wobei das Werkzeug Eingriffselemente zum Eingreifen in zumindest teilweise komplementär zu den Eingriffselementen gebildete Ausbuchtungen der Durchgangsöffnung des Adapterelementes aufweist. Wie beschrieben ist zum Ein- und Ausschrauben eines Adapterelementes der Gebrauch eines besonderen Werkzeuges vorteilhaft, damit eine Kraft und/oder ein Moment wirksam und ohne Verschleißverursachung auf das Adapterelement übertragen werden kann.

Das Werkzeug weist vorzugsweise zwei, drei, vier oder mehr Eingriffselemente auf, wobei zum Ein- oder Ausschrauben jedes der Eingriffselemente in jeweils eine Ausbuchtung der Durchgangsöffnung des Adapterelementes derart eingreift, dass zumindest eine Außenfläche des Eingriffselementes an der Begrenzungsfläche einer Ausbuchtung zumindest teilweise im Wesentlichen spielfrei anliegt. So kann ein Drehmoment besonders wirksam übertragen werden, da die Eingriffselemente in der Durchgangsöffnung praktisch spielfrei aufgenommen werden können. Außerdem tritt so nur minimaler Verschleiß an der Durchgangsöffnung des Adapterelementes beim Ein- und Ausschrauben auf.

Es hat sich herausgestellt, dass mit dem Werkzeug besonders wirksam gearbeitet werden kann, wenn es im wesentlichen T-förmig oder kreuzförmig aufgebaut ist, wobei ein die Eingriffselemente aufweisender Werkzeugast ausgehend von seinem die Eingriffselemente aufweisenden Ende derart hohl ausgebildet ist, dass eine zumindest teilweise von den Eingriffselementen und der Werkzeugastumwandung umgebene Öffnung zur Aufnahme eines Gegenstandes, insbesondere eines Rohres in das Innere des Werkzeugastes ermöglicht ist. Durch die T-Form oder Kreuzform des Werkzeuges kann ein Drehmoment besonders wirksam übertragen werden. Die Öffnung des die Eingriffselemente aufweisenden Werkzeugastes an dessen vorderem Ende kann beim Ausschrauben oder Einschrauben des Adapterelementes zur Einführung einer über die Auswerferstange hervorstehenden Kühlrohreinrichtung dienen. So kann der Umrüstvorgang beschleunigt und weiter vereinfacht werden.

Mit einer erfindungsgemäßen Vorrichtung kann das Formbodenelement und/oder der Formeinsatz einer Auswerfervorrichtung eines Thermoformwerkzeuges besonders schnell ausgetauscht werden mit einem Verfahren, das die Verfahrensschritte des Verstellens der Auswerferstange in Auswurfstellung, des Lösens des auszuwechselnden Formbodenelementes von der Auswerferstange durch die Abnahmebewegung, ggf. des Abziehens des auszuwechselnden Formeinsatzes und des Aufsetzens des einzuwechseinden Formeinsatzes, des Verbindens des einzuwechselnden Formbodenelementes mit der Auswerferstange durch die Aufsetzbewegung und des Verstellens der Auswerferstange in die Ausgangsstellung umfasst.

In der folgenden Beschreibung wird die Erfindung unter Bezugnahme auf die Zeichnung beispielhaft erläutert. In der Zeichnung zeigt:
- Fig. 1: einen Querschnitt durch eine aus dem Stand der Technik bekannte Auswerfervorrichtung eines Thermoformwerkzeuges,
- Fig. 2: in einer vergrößerten Darstellung eine Schnittzeichnung der Auswerfervorrichtung aus Fig. 1,
- Fig. 3: in einer Schnittzeichnung eine erfindungsgemäße Auswerfervorrichtung,
- Fig. 4a: eine perspektivische Ansicht des Adapterelementes der in Fig. 3 gezeigten Auswerfervorrichtung,
- Fig. 4b: das Adapterelement aus Fig. 4a in einer Aufsichtsdarstellung, wobei die Blickrichtung auf die dem Formbodenelement zugewandte Seite des Adapterelementes gerichtet ist,
- Fig. 4c: eine Seitenansicht des Adapterelementes aus Fig. 4a,
- Fig. 5a: eine perspektivische Ansicht eines Formbodenelementes einer erfindungsgemäßen Auswerfervorrichtung,
- Fig. 5b: eine Seitenansicht des in Fig. 5a dargestellten Formbodenelementes,
- Fig. 5c: das Formbodenelemente aus Fig. 5a in einer Aufsichtsdarstellung, wobei die Blickrichtung auf das der Auswerferstange zugewandte Ende des Formbodenelementes gerichtet ist,
- Fig. 6a: eine perspektivische Ansicht eines Werkzeuges zum Aus- und Einschrauben des Adapterelementes aus Fig. 4,
- Fig. 6b: eine Seitenansicht des Werkzeuges aus Fig. 6a,
- Fig. 6c: den markierten Bereich aus Fig. 6a in einer vergrößerten perspektivischen Darstellung,
- Fig. 7a: eine perspektivische Ansicht einer Auswerferstange einer erfindungsgemäßen Auswerfervorrichtung,
- Fig. 7b: eine Schnittdarstellung der Auswerferstange aus Fig. 7a,
- Fig. 7c: die Auswerferstange aus Fig. 7a in einer Aufsichtsdarstellung, wobei die Blickrichtung auf die dem Formbodenelement zugewandte Seite der Auswerferstange gerichtet ist.

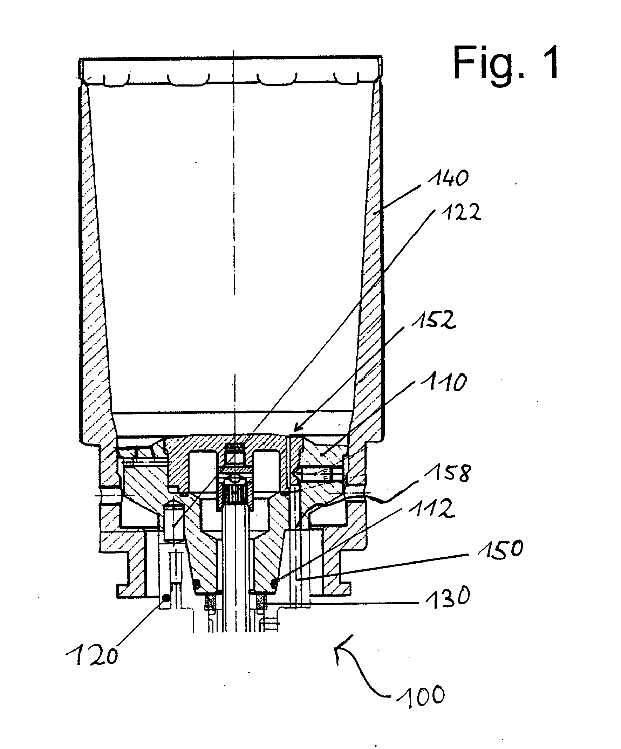

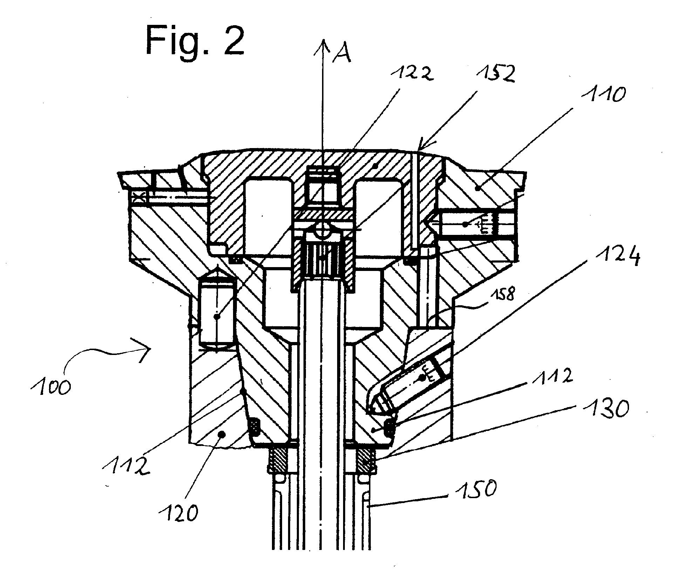

Die Figuren 1 und 2 zeigen eine aus dem Stand der Technik bekannte Auswerfervorrichtung 100 zum Auswerfen eines becherförmigen Formteiles aus einem im wesentlichen rotationssymmetrischen Formeinsatz 140, wobei durch den Formeinsatz 140 die Seitenflächen einer Kavität und durch ein Formbodenelement 110 die Bodenfläche der Kavität gebildet wird. Das Formbodenelement ist mit Hilfe mehrerer Feststelleinrichtungen 124 (nur eine gezeigt) mit einer Auswerferstange 120 verbunden, wobei die Feststelleinrichtungen jeweils eine quer zu der Auswurfrichtung (A) durch die Wandung der Auswerferstange 120 hindurchführende Gewindebohrung und einen in der Gewindebohrung angeordneten Gewindebolzen aufweisen. Zusätzlich ist ein in eine Bohrung des Formbodenelementes eingreifender Zylinderstift 122 vorhanden, der der richtigen Ausrichtung des Formbodenelementes 110 auf der Auswerferstange 120 dient. Dadurch wird sichergestellt, dass ein in der Auswerferstange gebildeter Saugkanal 150 in eine Vakuumöffnung 158 an der Rückseite des Formbodenelementes 110 einmündet. Damit ist eine Fluidverbindung zwischen einer Saugöffnung 152 in der Stirnseite des Formbodenelementes und dem Saugkanal 150 in der Auswerferstange 120 gewährleistet. Zwischen Formbodenelement und Auswerferstange wirkt zusätzlich eine Zentrierscheibe 130. Ein Umrüstvorgang zum Austauschen von Formbodenelement und ggf. Formeinsatz ist mit größerem Aufwand verbunden. Ein Abziehen des Formeinsatzes 140 ist bei über die Seitenwand der Auswerferstange 120 hervorstehenden Gewindebolzen verhindert. Daher erfordert ein Formwechsel das mehrmalige Ein- und Ausschrauben der Gewindebolzen der Feststelleinrichtungen 124.

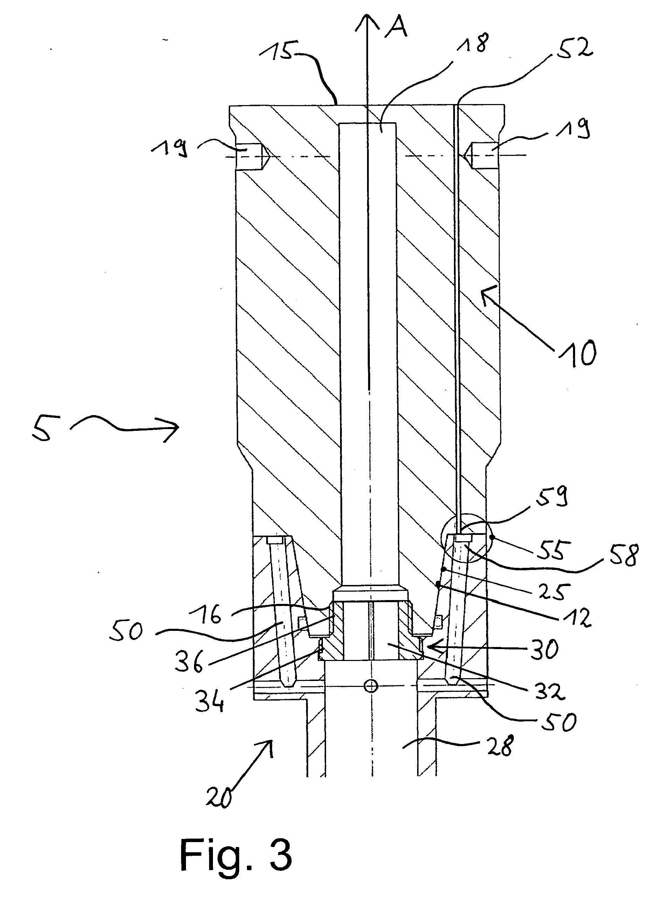

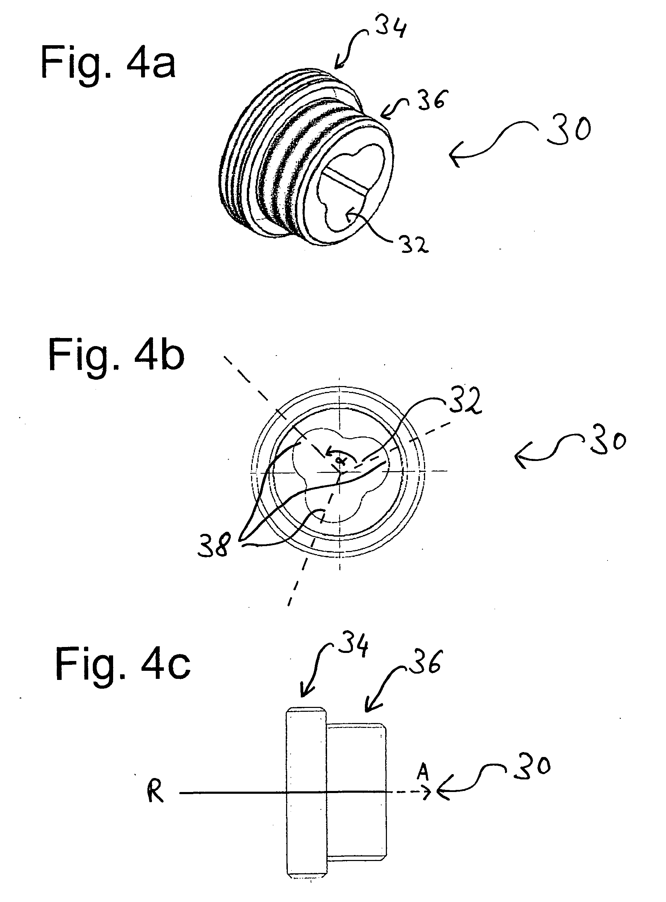

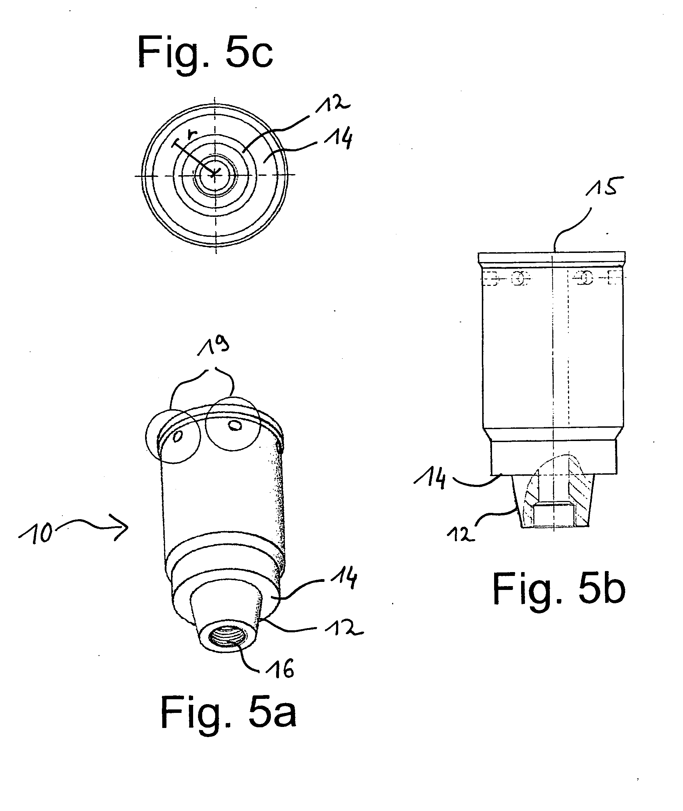

Fig. 3 zeigt in einer Schnittzeichnung eine erfindungsgemäße Auswerfervorrichtung wobei die Schnittebene parallel zur Auswurfrichtung (A) durch die zentrale Achse der Auswerferstange verläuft. Gezeigt sind der obere Teil einer Auswerferstange 20, ein Adapterelement 30 und ein Formbodenelement 10 die jeweils im wesentlichen rotationssymmetrische Gestalt aufweisen, wie aus den Figuren 4, 5 und 7 ersichtlich ist. Das Adapterelement ist über ein Außengewinde im Bereich eines ersten Abschnittes 34 in ein Gewinde der Auswerferstange 20 eingeschraubt. Das Formbodenelement 10 ist auf ein Außengewinde im Bereich eines zweiten Abschnitts 36 des Adapterelementes aufgeschraubt. Zu diesem Zweck weist das Formbodenelement an seinem der Auswerferstange zugewandten Ende ein Innengewinde 16 auf, das in den Rand einer Öffnung des Formbodenelementes 10 geschnitten ist, die gleichzeitig zur Einleitung und Ausleitung eines Kühlmittels in/aus einem an die Stirnfläche 15 des Formbodenelementes angrenzenden Kühlraum 18 dient. Das Kühlmittel wird über eine axial in der Auswerferstange 20 verlaufende Rohrleitung 28 durch eine Durchgangsöffnung 32 des Adapterelementes 30 in den Kühlraum 18 eingeleitet.

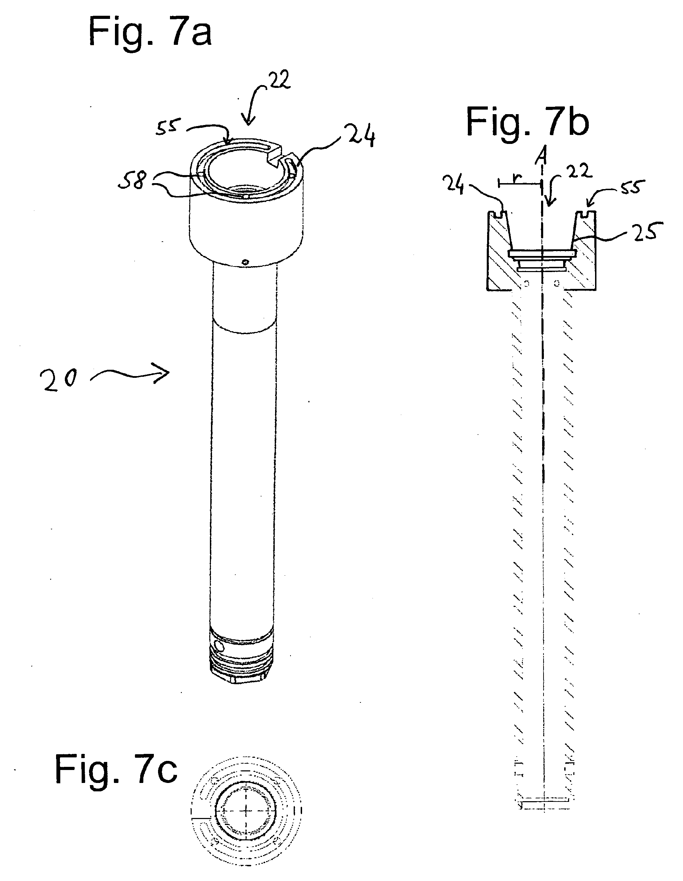

In der Stirnfläche 15 des Formbodenelementes 10 sind mehrere mit einem in der Auswerferstange 20 gebildeten Saugkanal 50 in Fluidverbindung stehende Saugöffnungen 52 gebildet. In einer dem Formbodenelement zugewandten, die zentrale Achse A der Auswerferstange ringförmig umlaufenden Auflagefläche 24 der Auswerferstange 20 ist ein Ringkanal 55 in Form einer die zentrale Achse A der Auswerferstange 20 ringförmig umlaufenden Nut gefertigt, mit dem der Saugkanal 50 in Fluidverbindung steht (siehe Figur 7). Die Vakuumöffnungen 59 in einer Berührfläche 14 am unteren Ende des Formbodenelementes 10 enden bei einer Auflage der Berührfläche 14 auf der Auflagefläche 24 unabhängig vom gegenseitigen Verdrehwinkel zwischen Formbodenelement und Auswerferstange in dem Ringkanal 55. Der Abstand r der Vakuumöffnungen 59 von der zentralen Achse A der Auswerferstange entspricht nämlich dem Radius des um die zentrale Achse A der Auswerferstange ringförmig verlaufenden Ringkanals 55. Das Formbodenelement weist an seinem der Auswerferstange zugewandten Ende einen sich zur Auswerferstange hin verjüngenden Konusansatz 12, 112 auf und in der dem Formbodenelement zugewandten Stirnseite der Auswerferstange 20 ist eine konische Aussparung 25 vorgesehen, in der der Konusansatz aufgenommen ist. Im oberen Bereich des Formbodenelementes 10 sind senkrecht zur Auswurfrichtung A radial verlaufende Montagebohrungen 19 als Montierhilfe gebildet.

Der Querschnitt der Durchgangsbohrung 32 des Adapterelementes 30 ist in den Figuren 4a und 4b erkennbar. Die Durchgangsöffnung 32 weist drei Ausbuchtungen 38 auf, die sich jeweils kreisbogenförmig in radialer Richtung nach außen erstrecken. Die Berandung der Durchgangsbohrung erinnert im Querschnitt an ein dreiblättriges Kleeblatt, wobei die einzelnen Blätter des Kleeblattes jeweils einen Winkel α von etwa 120° miteinander einschließen. Das Gewinde im ersten Abschnitt 34 des Adapterelementes der dargestellten Ausführungsform weist einen größeren Durchmesser auf, als das Gewinde im zweiten Abschnitt 36 des Adapterelementes. Es ist beispielsweise als ein M20x1-Gewinde ausgeführt, während das Gewinde im zweiten Abschnitt 36 des Adapterelementes als ein M16x1-Gewinde ausgeführt sein kann.

Das Formbodenelement der erfindungsgemäßen Vorrichtung wird also lediglich durch eine Drehbewegung auf das Außengewinde im Abschnitt 36 des Adapterelementes aufgeschraubt, so dass ein einfaches Abziehen des Formbodenelementes in Auswurfrichtung A nicht mehr möglich ist. Der durch das Aufschrauben hergestellte Form- und Kraftschluss wirkt also insbesondere in Auswurfrichtung A.

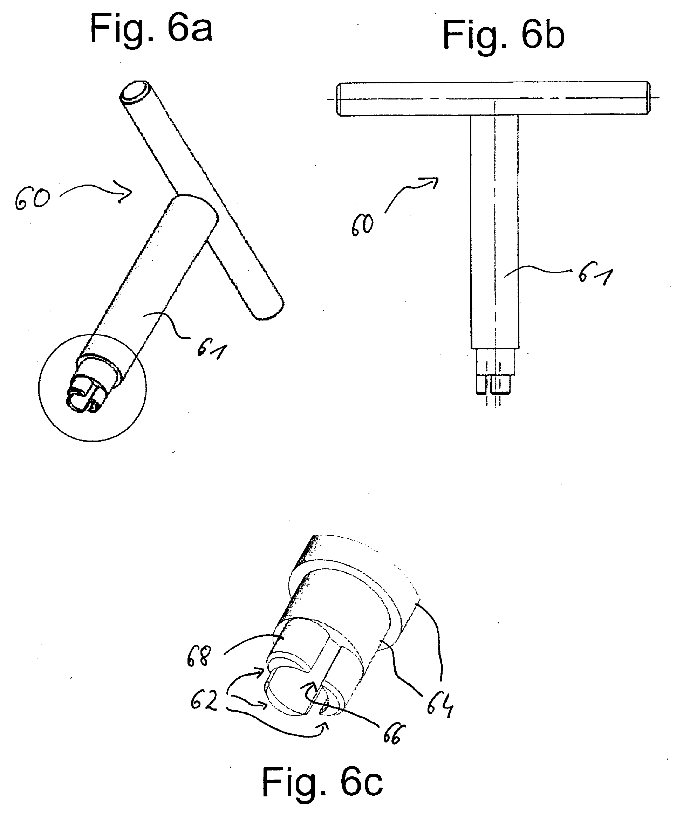

In Fig. 6 ist ein erfindungsgemäßes Werkzeug zum Ein- und Ausschrauben des Adapterelementes 30 dargestellt. Das Werkzeug ist im wesentlichen T-förmig, wobei der Werkzeugast 61 an seinem vorderen Ende drei Eingriffselemente 62 aufweist, deren Außenflächen 68 nach Eingriff der Eingriffselemente in die Ausbuchtungen 38 der Durchgangsöffnung 32 des Adapterelementes 30 an den Begrenzungsflächen der Ausbuchtungen zumindest teilweise im Wesentlichen spielfrei anliegen. An seinem vorderen Ende weist der Werkzeugast 61 eine Öffnung 66 auf, die der Aufnahme einer Kühlrohreinrichtung in das Innere des Werkzeugastes 61 beim Einschrauben und Ausschrauben des Adapterelementes 30 dient.

## Patentansprüche

1. Vorrichtung (5) zum Auswerfen von Formteilen aus einem Formeinsatz eines Thermoformwerkzeugs mit einem an einem Ende einer zwischen einer Ausgangsstellung und einer Auswurfstellung in einer in Axialrichtung der Auswerferstange verlaufenden Auswurfrichtung (A) bewegbaren Auswerferstange (20) angebrachten Formbodenelement (10), dessen Stirnfläche (15) in der Ausgangsstellung der Auswerferstange (20) den Formboden des Formeinsatzes bildet, wobei das Formbodenelement (10) mit der Auswerferstange (20) lösbar verbunden ist, **dadurch gekennzeichnet, dass** durch eine Aufsetzbewegung des Formbodenelementes (10) eine dem Lösen des Formbodenelementes (10) von der Auswerferstange (20) in der Auswurfrichtung (A) entgegenwirkende form- und/oder kraftschlüssige Verbindung zwischen Formbodenelement und Auswerferstange herstellbar ist.

2. Vorrichtung nach Anspruch 1, **dadurch gekennzeichnet, dass** die form und/oder kraftschlüssige Verbindung von Formbodenelement (10) und Auswerferstange (20) durch eine Abnahmebewegung des Formbodenelementes lösbar ist.

3. Vorrichtung nach Anspruch 1 oder 2, **dadurch gekennzeichnet, dass** die Aufsetzbewegung und/oder Abnahmebewegung eine Drehbewegung aufweist.

4. Vorrichtung nach einem der vorangehenden Ansprüche, **dadurch gekennzeichnet, dass** das Formbodenelement (10) auf/in ein sich in Axialrichtung der Auswerferstange (20) erstreckendes Gewinde (34) auf- und/ oder einschraubbar ist.

5. Vorrichtung nach einem der vorangehenden Ansprüche, **dadurch gekennzeichnet, dass** das Formbodenelement (10) an seinem der Auswerferstange (20) zugewandten Ende eine Gewindeöffnung (16) aufweist und durch Aufschrauben auf ein der Auswerferstange zugeordnetes Außengewinde mit der Auswerferstange (20) verbunden werden kann.

6. Vorrichtung nach einem der vorangehenden Ansprüche, **dadurch gekennzeichnet, dass** die Vorrichtung ein Adapterelement (30) zum Verbinden von Formbodenelement (10) und Auswerferstange (20) aufweist, wobei das Adapterelement (30) über ein erstes Außengewinde im Bereich eines ersten Abschnittes (34) des Adapterelementes in ein dazu komplementäres Innengewinde der Auswerferstange (20) einschraubbar ist, und das Formbodenelement auf ein zweites Außengewinde im Bereich eines zweiten Abschnitts (36) des Adapterelementes aufschraubbar ist, wobei die beiden Außengewinde des Adapterelements (30) ggf. unterschiedliche Gewindedurchmesser aufweisen.

7. Vorrichtung nach Anspruch 6, **dadurch gekennzeichnet, dass** das Adapterelement (30) :n Auswurfrichtung eine Durchgangsöffnung (32) aufweist.

8. Vorrichtung nach Anspruch 7, **dadurch gekennzeichnet, dass** die Durchgangsöffnung in einer senkrecht zur Auswurfrichtung verlaufenden Ebene sich jeweils in radiale Richtung nach außen erstreckende Ausbuchtungen (38) aufweist, die beim Ein- und/oder Ausschrauben des Adapterelementes (30) in das Innengewinde der Auswerferstange (20) als Eingriffsöffnungen für ein komplementär zu den Ausbuchtungen (38) gebildete Eingriffselemente aufweisendes Werkzeug (60) dienen.

9. Vorrichtung nach Anspruch 8, **dadurch gekennzeichnet dass** die Durchgangsöffnung (32) zwei, drei, vier oder mehr Ausbuchtungen (38) aufweist, die sich jeweils kreisbogenförmig in radialer Richtung nach außen erstrecken, wobei die sich ausgehend von der Mitte der Durchgangsöffnung (32) durch die zu den drei Kreisbögen gehörenden Kreismittelpunkte erstreckenden Halbgeraden miteinander jeweils einen Winkel (α) von etwa 180°, 120°, 90° oder weniger einschließen.

10. Vorrichtung nach einem der vorangehenden Ansprüche, wobei in der Stirnfläche (15) des Formbodenelementes (10) mindestens eine mit einem in der Auswerferstange (20) gebildeten Saugkanal (50) in Fluidverbindung stehende Saugöffnung (52) vorgesehen ist und der Saugkanal (50) mit einer Saugeinrichtung in Fluidverbindung steht, **dadurch gekennzeichnet, dass** in einer dem Formbodenelement zugewandten Auflagefläche (24) der Auswerferstange und/oder in einer der Auswerferstange (20) zugewandten Berührfläche (14) des Formbodenelements (10) ein Ringkanal (55) in Form einer die zentrale Achse (A) der Auswerferstange zumindest teilweise ringförmig umlaufenden Nut gebildet ist, wobei der Ringkanal (55) mit der mindestens einen Saugöffnung und dem Saugkanal in Fluidverbindung steht.

11. Vorrichtung nach Anspruch 10, **dadurch gekennzeichnet, dass** die Auflagefläche (24) mindestens eine mit dem Saugkanal (50) in Fluidverbindung stehende Kanalöffnung (58) und die Berührfläche (14) jeweils mit mindestens einer Saugöffnung (52) in Fluidverbindung stehende Vakuumöffnungen (59) aufweist, wobei Kanal- und Vakuumöffnungen (58, 59) im etwa dem Radius (r) des Ringkanals (55) entsprechenden Abstand von der zentralen Achse der Auswerferstange in Auflagefläche bzw. Berührfläche (14, 24) gebildet sind.

12. Vorrichtung nach Anspruch 10 oder 11, **dadurch gekennzeichnet, dass** sowohl Berührfläche (14) als auch Auflagefläche (24) etwa senkrecht zur zentralen Achse (A) der Auswerferstange verlaufen und diese etwa ringförmig umlaufen.

13. Vorrichtung nach einem der vorangehenden Ansprüche, **dadurch gekennzeichnet, dass** das Formbodenelement (10) in einer Seitenfläche mindestens eine senkrecht zur Auswurfrichtung (A) verlaufende Montagebohrung (19) aufweist.

14. Werkzeug (60) zum Ein- und Ausschrauben eines Adapterelementes (30) einer Vorrichtung nach einem der Ansprüche 6 bis 8, **dadurch gekennzeichnet, dass** das Werkzeug Eingriffselemente (62) zum Eingreifen in zumindest teilweise komplementär zu den Eingriffselementen gebildete Ausbuchtungen (38) der Durchgangsöffnung (32) des Adapterelementes (30) aufweist.

15. Werkzeug (60) nach Anspruch 14, **dadurch gekennzeichnet, dass** das Werkzeug drei Eingriffselemente (62) aufweist, wobei nach Eingriff der Eingriffselemente (62) in die Ausbuchtungen jedes der drei Eingriffselemente in jeweils eine Ausbuchtung der Durchgangsöffnung derart eingreift, dass zumindest eine Außenfläche (68) des Eingriffselementes an der Begrenzungsfläche einer Ausbuchtung zumindest teilweise im Wesentlichen spielfrei anliegt.

16. Werkzeug nach Anspruch 14 oder 15, **dadurch gekennzeichnet, dass** das Werkzeug (60) im Wesentlichen T-förmig oder kreuzförmig aufgebaut ist, wobei ein die Eingriffselemente (62) aufweisender Werkzeugast (61) ausgehend von seinem die Eingriffselemente (62) aufweisenden Ende derart hohl ausgebildet ist, dass eine zumindest teilweise von den Eingriffselementen (62) und der Werkzeugastumwandung (64) umgebene Öffnung (66) zur Aufnahme eines Gegenstandes, insbesondere eines Rohres in das Innere des Werkzeugastes ermöglicht ist.

17. Thermoformwerkzeug mit mindestens einem Formeinsatz und mindestens einer Vorrichtung nach einem der Ansprüche 1 bis 13.
